# EUROPEAN PATENT SPECIFICATION

(11) **EP 2 139 307 B1**
(45) Date of publication and mention of the grant of the patent: **16.03.2011**
(21) Application number: 08737120.9
(22) Date of filing: 24.04.2008
(51) Int. Cl.: A01C 7/02, A01G 25/00, A01G 27/00, A01G 29/00

(54) **AN IRRIGATION DEVICE**
BEWÄSSERUNGSVORRICHTUNG
DISPOSITIF D'IRRIGATION

(30) Priority: 24.04.2007 GB 0707932
(43) Date of publication of application: 06.01.2010
(73) Proprietor: H2optiflow Limited, 32A East Street St Ives Huntingdon Cambs PE27 5PD (GB)
(72) Inventor: WILLIAMS, David, Cambridgeshire PE19 5RB (GB); WILLIAMS, Cheryl, Cambridgeshire PE19 5RB (GB); KLUTH, Andrew, Sandy, SG19 3PF (GB); FLICKER, Wendy, London N15 5JJ (GB)
(74) Representative: Finnie, Peter John
(86) International application number: PCT/GB2008/001475
(87) International publication number: WO 2008/129310

(56) References cited:
- EP-B- 1 762 139
- DE-A1- 3 046 479
- FR-A- 2 727 282
- US-A- 5 172 515
- US-A1- 2003 079 402
- US-A1- 2006 283 079

## Description

### Field of the Invention

The present invention relates to the field of plant irrigation, and in particular to subsoil drip irrigation systems.

### Background to the Invention

It is well-known that the moisture levels of the soil, or other medium, in which a plant is nurtured has a significant bearing on its health, in particular with respect to the rate at which it grows. As such, it has long been known to manage this characteristic of soils through various irrigation systems designed to compensate for a lack of natural moisture.

Irrigation systems are broadly defined in three categories: flood irrigation, spray irrigation and drip irrigation. While flood and spray irrigation are effective in treating large areas of soil they are inefficient as a large proportion of the water applied is lost to evaporation or simply does not reach the plants for which it is intended. Moreover, the inherent lack of fine control in flood and spray irrigation inherently risks over-hydrating the soil to which it is applied.

Drip irrigation is commonly recognised to overcome these difficulties due to its ability to deliver a controlled water flow to match required hydration levels at a specific location. Nevertheless, many common drip irrigation systems do not fully exploit this, simply delivering water to the surface of the soil in the general proximity of the plant. Again, this leads to evaporation of water before it reaches the plant and is therefore an inefficient use of water.

Water scarcity is becoming an increasing problem in agriculture and domestic use, both in developing and developed countries. Clearly, the inefficiency of the above-described irrigation techniques is undesirable in this context.

Superior drip irrigation efficiency has been achieved by sub-soil delivery systems. For examples, an irrigation device is known that has a conically-shaped plastic hollow spike attached to (or integrally formed with) a connector. In use, the spike is pushed into the earth while a detachable water reservoir (typically a plastic bottle) is attached to the connector. The spike contains one or more holes through which water then passes into the soil.

While this prior art device has the advantage of delivering water to a subsoil level, thereby avoiding the majority of the detrimental evaporation effects found in alternative irrigation systems, it suffers from a number of defects that limit its efficacy in the majority of circumstances.

In particular, the holes used to control the delivery of water into the soil are liable to be blocked, or clogged, by a number of phenomena such as: the ingression of soil particles into the delivery device; the collapse of the soil structure against the wall of the device; the wetting/drying of clay compounds creating a hard baked shield around the device; and the migration of roots towards the device. In this last case the plant may even be damaged by the device, particularly in removal of the device from the soil.

Moreover, the device must be manually removed from the earth once it has served its purpose (for example, at the end of the growing season). This is labour-intensive and makes it inconvenient for even small-scale commercial agriculture. Furthermore, as described above this may even damage the roots of the plant that it serves.

US 2003/079402 A1 discloses an irrigation device comprising a connector end for engagement with a liquid supply and a dispenser body adapted to receive liquid from the connector end.

### Summary of the Invention

According to an aspect of the present invention, there is provided an irrigation device comprising: a connector end for engagement with a liquid supply; and, a biodegradable dispenser body adapted to receive liquid from the connector end, wherein an outer surface of the dispenser body is substantially water-resistant with the exception of one or more permeable feeder areas from which liquid can be released at a higher rate than from the water-resistant areas. In preferred embodiments, the liquid supply is detachable.

Though the irrigation technique that is achieved using the irrigation device of the present invention is generally known in the art as "drip irrigation" it is to be understood that the physical release of liquid from the device is actually a leaching process. The distribution of liquid from the irrigation device is either by suction and capillary action within the surrounding soil, or by external pressure provided by the liquid supply, or a combination of each of these factors.

Preferably, the dispenser body has a hollow core section extending along at least a portion of the length of the body. The hollow section facilitates the rapid saturation of the dispenser body.

The present invention provides a sub-surface irrigation system enabling drip irrigation for any flora. The liquid passes through the connector end into the surrounding soil substrate through the feeder area. The use of one or more feeder areas in an otherwise water-resistant surface of the biodegradable dispenser body enables the output of liquid to be directionally controlled. In this way, liquid may be directed to an area of the surrounding soil substrate at which it is most required, negating the risk of evaporation and other dispersive mechanisms that prevent the efficient delivery of liquid to flora in other irrigation techniques. Moreover, the water-resistant surface of the biodegradable dispenser body may be used to maintain the structural integrity of the device during use.

The use of a biodegradable dispenser body avoids the need to remove the device from the soil substrate. As such, the usual risks associated with root ingression into the device and subsequent damage to roots on removal of the device are negated. In a preferred embodiment, the connector end is also biodegradable so that no part of the device need be removed after use. In another preferred embodiment, the connector end is re-usable. The use of biodegradable materials means that the irrigation device of the present invention may be manufactured easily and from inexpensive materials.

In the present invention, the feeder areas are preferably at least twice as permeable to liquid as the water-resistant areas, more preferably 3-1000 times more permeable, more preferably 5-100 times more permeable. The liquid itself is preferably an aqueous liquid and may be water itself.

Preferably, up to 98% of the outer surface of the biodegradable dispenser is water-resistant. However, the water-resistant area preferably constitutes greater than 40%, more preferably greater than 50%, more preferably greater than 75%, more preferably greater than 90% of the outer surface of the biodegradable dispenser.

In a preferred embodiment, the biodegradable dispenser body comprises a liquid-transmissible, for example, porous, substrate and a protective coating, wherein the protective coating provides the water-resistant outer surface of the dispenser. In such an embodiment, the device employs a water-resistant epidermal outer skin coating applied in a controlled manner to parts of the biodegradable dispenser substrate to determine exit points for the water below ground and, where appropriate, to ensure the integrity of the connection to the reservoir. However, the water-resistant surface of the dispenser body may be realised in other ways, such as by heat or chemical treatment of the exterior of the substrate used to form the dispenser.

The liquid supply may be a separate storage vessel such as a plastic (typically PET) beverage bottle. Standard beverage bottles incorporate an externally threaded neck portion which, in one preferred embodiment, can be coupled to a correspondingly threaded connector end. However, any type of bottle or carton may be used. Alternatively, the liquid supply may be coupled to the irrigation device (or indeed several devices) through a hose system. In this case, the liquid supply may be a water reservoir such as a water butt (typically arranged to collect rainwater) or a mains water supply coupled to the or each irrigation device via a hose, preferably a micro-irrigation hose, system.

The connector end may have an internally or externally threaded portion to provide a suitable connection to the liquid supply, or may simply be shaped so as to provide an interference-fit (whether male or female) with the liquid supply. The connector end may be integrally formed with the biodegradable dispenser body or may be detachable from the dispenser body so that it can be reused. A detachable connector end may form a screw-fit or interference-fit with the dispenser body, or may be adapted to be clamped to the dispenser body. The connector end may be designed to accommodate common liquid storage vessels, such as plastic (typically PET) beverage bottles. Alternatively, the connector end may adapted for connection to bespoke storage vessels, or to hoses, preferably micro-irrigation hoses.

Biodegradable materials that may be used in accordance with the present invention may include both man-made and naturally occurring substances. The materials are typically formed by compression moulding, injection moulding, extrusion, casting, pneumatic shaping and/or vacuum forming, etc. However, other methods of manufacture and materials may be used in accordance with the present invention. For example, in one preferred embodiment, the dispenser body is formed from a fibreboard material, preferably corrugated fibreboard, which is folded or wrapped and then sealed or fastened into a suitable shape and configuration. In this embodiment, a core section of the dispenser body may be filled with a different material. Furthermore, the corrugations of the fibreboard may be pre-filled with one or more additives which are subsequently dispensed in use. Corrugated fibreboard provides a relatively rigid dispenser body.

In a preferred embodiment of the present invention, the biodegradable material of the dispenser body comprises soluble additives. As water passes through the biodegradable dispenser it carries the additives with it into the surrounding soil, thereby further aiding the growth of the flora it feeds. Suitable additives may include alkalis or acids to rebalance the pH of the surrounding medium, artificial fertilizers, and compost.

In another preferred embodiment, the dispenser body carries one or more seeds in the outer surface of the body. The seeds may be carried in recesses formed in the dispenser body or within a coating applied to the outer surface of the body. In this manner, both planting and subsequent irrigation can be controlled using a single device.

### Brief Description of the Drawings

Examples of the present invention will now be described in detail with reference to the accompanying drawings, in which:
Figures 1A to 1D show an example of an irrigation device having a male connector end;
Figures 2A to 2D show an example of an irrigation device having a female connector end;
Figures 3A to 3C show plastic bottles coupled to the irrigation devices of Figures 1 and 2;
Figures 4A to 4F show various arrangements of the feeder areas upon the device;
Figures 5A and 5B show an example of an irrigation device having a detachable connector end which is adapted to be clamped to the body of the irrigation device;
Figure 6 shows an example of an irrigation device formed from corrugated fibreboard:
Figure 7 shows a blank from which the embodiment of Figure 6 may be formed;
Figure 8A shows additives disposed upon the surface of corrugated fibreboard which may be used in the production of the embodiment of Figure 6;
Figure 8B shows additives disposed within the corrugations of fibreboard which may be used in the production of the embodiment of Figure 6;
Figure 9 shows a screw threaded connector end for use with the irrigation device of Figure 6;
Figures 10A to 10C show possible arrangements of seeds within the dispenser body according to the present invention; and,
Figure 11 shows schematically an example of a micro-irrigation hose system coupled to an array of irrigation devices.

### Detailed Description

"Biodegradable" means that the material is susceptible to being assimilated by microorganisms when buried in the ground or otherwise contacted with the organisms under conditions conducive to their growth. All degradation products are preferably safe, non-toxic and non-accumulable in nature, *i.e*. should be subject to complete microbial degradation.

Biodegradation reactions are typically enzyme-catalyzed and generally occur in the presence of moisture. Natural macromolecules containing hydrolyzable linkages, such as protein, cellulose and starch, are generally susceptible to biodegradation by the hydrolytic enzymes of microorganisms. Some man-made polymers, however, are also biodegradable.

The present invention provides an effective device for delivery of liquid to a sub-surface level of a surrounding medium, in order to nourish plants growing in that medium. The following description will describe the typical case where the liquid is water and the medium is soil, but it should be recognised that any other suitable liquid or medium may be used in accordance with the present invention. Examples of other suitable mediums include sand, loam, clay, and compost.

The particular geometry of the irrigation device is variable, but each device has a dispenser body and a connector end. In use, the dispenser body is disposed in the soil, while the connector end is attached to a liquid reservoir, commonly a plastic bottle. Water then passes through the dispenser end from the connector end, and into the surrounding soil. The dispenser body is designed to deliver the water to a desired part of the soil, typically the area around the root-balls of a plant. In order to efficiently dispense the water at the required point the surface of the dispenser body is water-resistant apart from one or more feeder areas. Both the location of the feeder areas and the shape and configuration of the dispenser body are adapted to the particular use for which the device is employed. For example, criteria affecting these factors will include the location in the soil at which water is required, the nature of the soil (and consequent structural requirements for the dispenser), and the rate at which it is desirable for water to enter the soil.

The form of the device is created by moulding under pressure and/or heat, vacuum forming or other suitable process, thereby enabling the delivery of various shapes and configurations. In essence the shape will be linear-tubular but may, in variations, take the shape of an ovaloid, sphere, pipe, sausage, spike, wedge, bulb, pyramid, cone, or other combinations to serve specific application requirements.

Other methods of manufacture and materials may be used in accordance with the present invention. For example, in one preferred embodiment, the dispenser body is formed from a fibreboard material, preferably corrugated fibreboard, which is folded or wrapped and then sealed or fastened into a suitable shape and configuration.

There are several configurations of shape of the device. These variations will include differences in length, width and basic shape to accommodate the requirements of different flora with which the device is to be employed. Typically, the length of the dispenser will vary between 20mm and 400mm.

To further enhance stability of the device in the ground, the exterior face of the device may incorporate radial fins, grooves, louvers or ridges running part of or the full length of the exterior fascias. Internal fins or other strengthening mould patterns may be incorporated in some variations to offer similar qualities. Although in some embodiments the fins or other strengthening structures may be formed of the same material as the rest of the dispenser body, it is also envisaged that such structures may be formed of a different composition, material, or method of manufacture.

The connector end of the device is in some models configured such that it creates a substantially circular shoulder to support different configurations of reservoir containers or vessels. The shoulder may have other geometries according to both aesthetic and functional requirements. The shoulder of the connector end is preferably configured such that it offers a flat platform in connection with the soil and, as such, greater stability and strength for the device when in use. The shape of the upper region of the shoulder will be configured in dimensions appropriate to better support and balance a selection of reservoir containers.

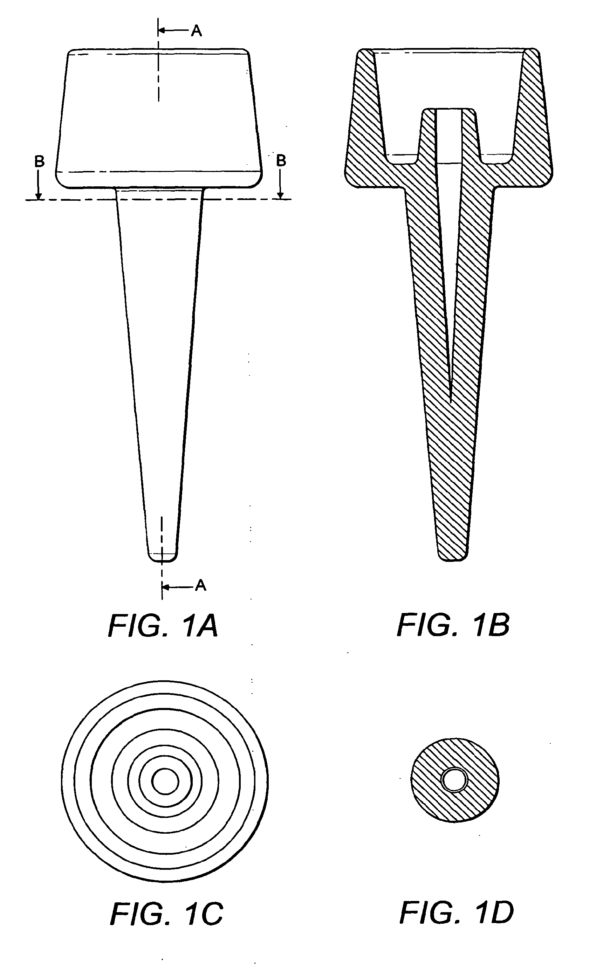

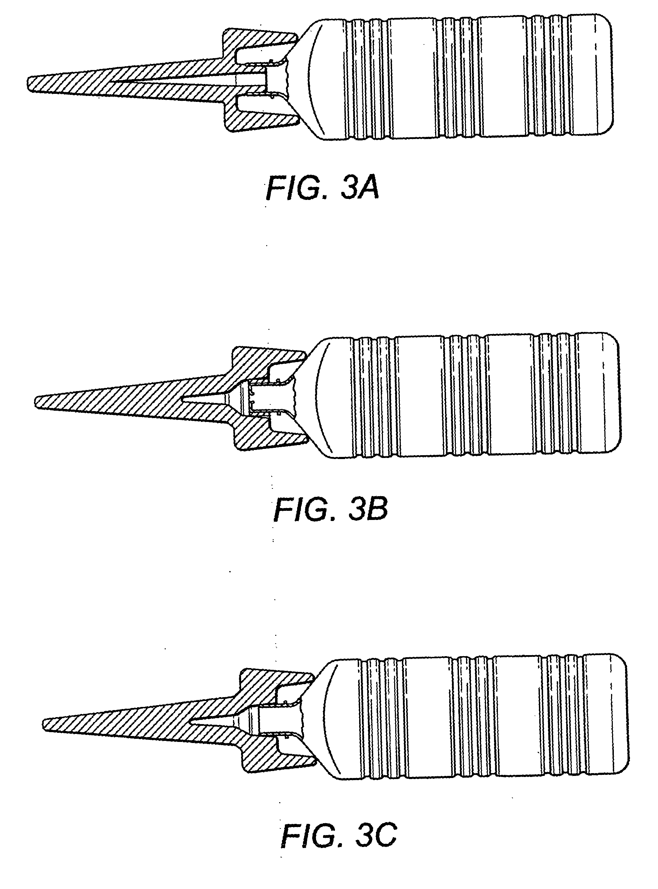

Figures 1A to 1D show a particular embodiment of the present invention in which the connector end has a male spigot. As shown in Figure 3A, the male connector end can be inserted into the neck of a plastic bottle. Where the male connector end provides a simple interference-fit, it may preferably employ ridges, ribs or other formed shapes to enhance the fit and function of the joint so formed.

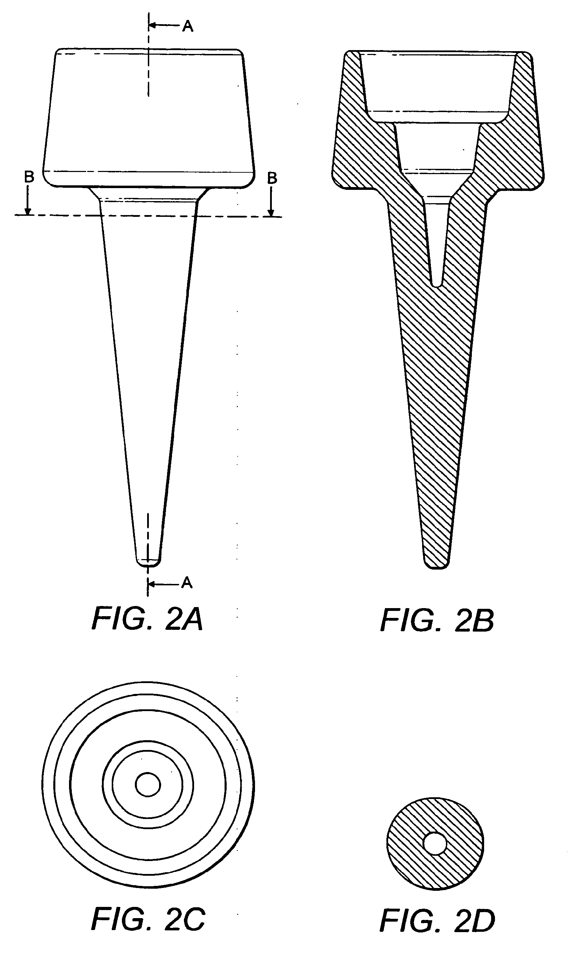

Figures 2A to 2D show a similar embodiment of the present invention in which the connector end is female. As shown in Figure 3B, the female connector end in some applications utilises the external screw thread of the plastic bottle. In this example a separate internally threaded fitting is placed or formed within the female connector end to receive the threaded neck of the plastic bottle. As shown in Figure 3C, it is instead possible to employ an interference-fit with the neck of the bottle to provide a suitable joint.

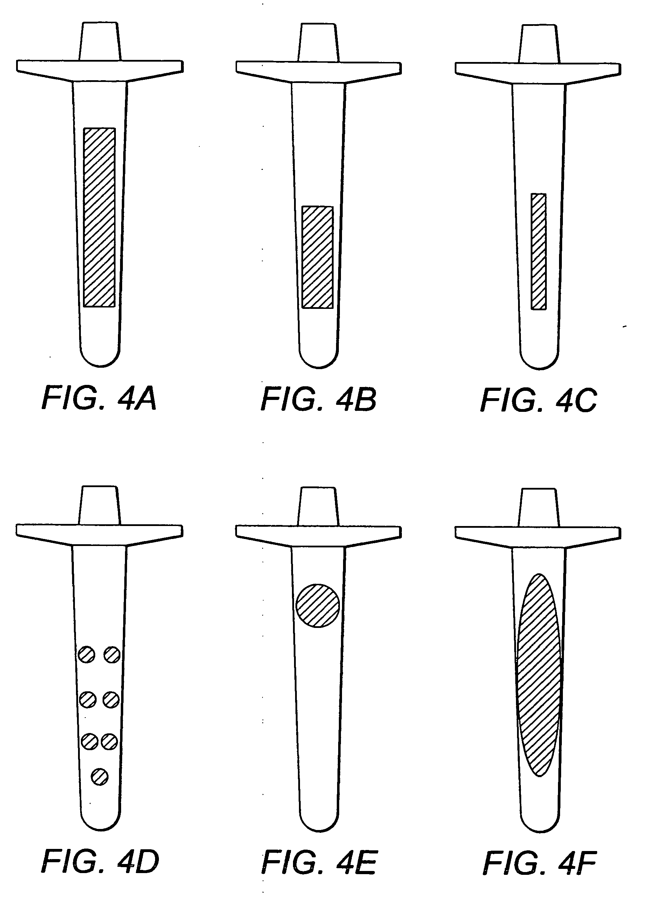

As mentioned previously, the location and geometry of the feeder areas upon the dispenser body is variable, and therefore can be adapted according to requirements. Figures 4A to 4F show a variety of possible arrangements of the feeder area(s) - the shaded areas represent the feeder areas.

In the present invention, the substrate used to form the body of the dispenser includes one or more biodegradable materials. Preferably, greater than 75% by weight of the substrate is biodegradable, more preferably greater than 85%, more preferably greater than 95%, more preferably greater than 99%, more preferably substantially 100%. Preferably greater than 90% of the material degrades within the period of 1 year or less, more preferably greater than 95%, more preferably substantially 100%.

The substrate is generally liquid-permeable, such that the substrate is capable of carrying liquid from the region adjacent to the connector end to be released via the feeder areas.

The formula of substrate will determine the lifespan of the working device and its rate of biodegradability. The functioning lifespan of each device will vary to suit the specific requirements of the plant genus which the device serves. Typically that lifespan may include a 20 week growing season for a cereal crop, herb or range of perennial decorative plants but may also extend to a full year for a sapling or be as short as a few weeks for seeds.

The substrate may be constructed from natural or man-made materials. Such materials may be virgin or recycled. The substrate is preferably formed from byproduct and/or waste materials.

Preferably, the substrate comprises material selected from the group consisting of paper, paper pulp, board, sawdust, wood, wood chippings, bamboo, bagasse, oil palm stem, popula, wood flour, fruit hull powder, moss, peat, mulch, grasses, straw, hay, cotton, starch, seeds, seed husks, silage, cereal and cereal husks, kernels, bread, flour, skin, faeces, manure, dung, fish cartilage, leaves of various flora, bark of various flora, plant stems, seaweed and other naturally growing flora, bone, bone meal, vegetables, fruit, fibre, hair, fur, feathers, clay, shell, ash, rags, felt and other commercially produced fabrics and mixtures of any of the preceding materials. Preferably greater than 75% of the consolidated substrate is formed from one or more of these materials, more preferably greater than 85%, more preferably greater than 95%, more preferably substantially 100%. These materials may be reduced to a suitable grade and size prior to consolidation using conventional methods.

Starch is a preferred substrate material. This can also be used as a binder for the core substrate (discussed in further detail below). Starch can be selected from natural starch, chemically and/or physically modified starch, biotechnologically produced and/or genetically modified starch and mixtures thereof. The term "starch" as used herein covers in general all the starches of natural or vegetable origin composed essentially of amylose and amylopectin. They can be extracted from various plants, such as, for example, potatoes, rice, tapioca, maize and cereals such as rye, oats and wheat. The term "starch" also covers modified starches. By modified, it is meant that the starch can be derivatized or modified by typical processes known in the art such as, *e.g*. esterification, etherification, oxidation, acid hydrolysis, cross-linking, and enzyme conversion. Such starches include starch ethoxylates, starch acetates, cationic starches, oxidized starches, cross-linked starches and the like.

Preferred sources of starches are seeds of cereal grains (*e.g*., corn, waxy corn, wheat, sorghum, rice, and waxy rice), tubers (potato), roots (tapioca (*i.e*., cassava and maniac), sweet potato, and arrowroot), and the pith of the sago palm.

Preferably, 2-99% by weight of the consolidated substrate is made up of fibrous material embedded in a binder material, more preferably 10-85%, more preferably 25-75%.

An amount of water may also be present in the consolidated substrate. This may be present as water associated with the substrate material, or may be free water which may be removed easily by heating. Typically, the consolidated substrate may contain up to 30% residual water. Preferably, the consolidated substrate contains less than 10% residual water, more preferably less than 5%.

Reference to the consolidated substrate means the moulded and substantially dried substrate which can be used directly in the dispenser body of the present invention.

The substrate materials are preferably consolidated through the introduction of a suitable binder to achieve a rigid dispenser. The substrate may be consolidated either using the inherent cohesive/adhesive properties of the core substrate material, and/or by the addition of a binder material to the core substrate material prior to or during consolidation thereof. The process of consolidation usually also requires the application of pressure and/or heat in order to form a consolidated substrate which can be used in the device of the present invention.

Starch based materials are particularly preferred binder materials. The types and properties of starch are discussed above. Unmodified starch-based binders are generally preferred over modified starch-based binders because they are significantly less expensive and produce comparable devices. Alternative binder materials include waxes, fatty alcohols, phospholipids and glycerol. The binder material is preferably present in the substrate in an amount of 1-98% by weight, for example 15-90%, for example 25-75%.

In addition to the substrate material and binder material, one or more optional additive materials may be incorporated into the substrate. In one embodiment, water-soluble plugs containing these additives may be inserted into the substrate of the dispenser. Alternatively or additionally, the additives may form part of the substrate or binder materials. Additives may also be incorporated into the water supply.

Natural plant enhancers such as compost, manure, potash, bone-meal and other similar substances may be used as an additive.

For example, additives including fertilizer, fruit enhancers, vegetable enhancers, foliage enhancers, pesticides, weed killers, micro-nutrients (such as zinc, copper, boron, and seaweed extracts), plant growth promoters and hormones, pH-regulators, salt binding agents and adsorbents may be incorporated into the substrate. Other materials which are generally accepted as improving the welfare of flora and/or improving crop yield and/or controlling pests, fungus, insects, arachnids, slugs, snails or other infestations may also be included. Some variations may incorporate soluble or semi-soluble or water activated or continuously live olfactory or taste materials which will dissuade/repel animals, birds, insects, reptiles, amphibians or other undesirable creatures from the proximity of the device. The preceding additive materials may be formulated with the binder and/or with the substrate prior to consolidation of the substrate. Alternatively, or in addition, the additive material may by incorporated into the substrate after consolidation thereof, for example, by soaking the substrate in a solution containing the additive material.

The pH-controlling agents can be used to control the acidity of the immediate environment, and agents such as gypsum and activated charcoal can minimise the impact of adverse chemical contaminants and salt in the soil or medium, as well as to improve germination, and/or to aid and accelerate plant establishment. Suitable pH additives include lime, chalk, gypsum and peat.

Water retaining substances and wetting agents, which can be synthetic or natural material (such as clay minerals, *e.g*. bentonite and zeolite clays, or gelatine products, or surfactants such as non-ionic, anionic, cationic and amphoteric surfactants or other wetting adjuvants), can be included to prevent overly rapid water loss from the substrate. Examples of such water-retaining substances include silica gels and so-called "super absorbents" such as super absorbent acrylic polymers. In the case of wetting agents, these assist in dispersing the water throughout the medium, and allow less absorbent forms of substrate material to be used.

Suitable types of pesticides include herbicides, fungicides, insecticides and nematicides.

Natural earth fillers can be included in the substrate for a stronger product. Suitable fillers include but are not limited to clays such as bentonite, amorphous raw products such as gypsum (calcium sulfate dehydrate) and calcium sulfate, minerals such as limestone and man made materials such as fly ash. These natural earth fillers are able to take part in the cross linking and binding that occur during consolidation of the substrate material. Other examples of useful fillers include perlite, vermiculite, sand, gravel, rock, limestone, sandstone, glass beads, aerogel, xerogels, seagel, mica, clay, synthetic clay, alumina, silica, fused silica, tabular alumina, kaolin, microspheres, hollow glass spheres, porous ceramic spheres, calcium carbonate, calcium aluminate, lightweight polymers, xonotlite (a crystalline calcium silicate gel), lightweight expanded clays, hydrated or unhydrated hydraulic cement particles, pumice, exfoliated rock, and other geologic materials.

Preferably, the additive material (other than substrate and binder) is added in an amount of 1-50%, more preferably up to 20%, more preferably up to 10%, more preferably up to 5%, by weight of the consolidated substrate.

Baking powder and other materials, such as leavening agents, which release gases, (*e.g*., sodium or calcium bicarbonates or carbonates) can be included in the compositions of the invention to elevate the porosity of the final structure by introducing a source of carbon dioxide gas which is released in the mould.

Glycerol, microcrystalline wax, fatty alcohols and other similar organic molecules can be added as a mould release agent, and to produce a smoother surface on the finished product. These mould release agents can be added from 0-10% by weight of the consolidated substrate, preferably 1-5%.

The additional materials can be predisolved or can be added dry to the substrate prior to consolidation thereof.

With regard to the process for production of consolidated substrate, any amount of pressure can be used that achieves the desired product. For example, pressure between approximately 14kPa to 21 kPa (2-3 psi) may be appropriate. Likewise, any amount of heat may be used that achieves the desired result. For example, in one embodiment, the heat used to mould the device of the present invention is preferably between about 50-250° C.

In a preferred embodiment, the binder is added to the unconsolidated substrate material or vice versa, and a substantially homogenous mixture is produced by simple mixing or equivalent process. Water is usually added during or after mixing, or may be added to the substrate and/or the binder material prior to mixing. The optional additive may also be advantageously added to the unconsolidated mixture.

Varying amounts of water can by added to facilitate different types of moulding, since the form of the pre-moulded product is dependent on the mould and the other process conditions which may be applied to produce a consolidated final product.

Where starch is used as a binder, it is preferably pre-gelled and mixed until a substantially homogeneous mixture is generated.

With regard to the coating of the dispenser, biodegradable polymers that may be used to coat or impregnate the outer surface of the substrate include a range of water-resistant natural polymers, synthetic polymers, such as polyesters, polyester amides, polycarbonates and the like, and naturally-derived semi-synthetic polyesters (*e.g.* from fermentation).

The coating that is applied to, or produced at the surface of the substrate is preferably a water-resistant and biodegradable film. In a preferred embodiment, the film is substantially water impermeable.

Besides being water-resistant and biodegradable, the outer coating may exhibit certain other physical properties, such as stiffness, flexibility, water-resistance, oil-resistance, solvent resistance, strength, elongation, temperature stability, moisture vapour transmission and gas permeability.

The water resistant outer coating preferably comprises material selected from the group consisting of PVA, pitch, bitumen, grease, fat, oil, plastic, acrylic, cellulose, resin, sap, clay, waxes, wax blends, paraffin (synthetic wax); shellac; xylene-formaldehyde resins; drying oils; reconstituted oils from triglycerides or fatty acids from the drying oils to form esters with various glycols (butylene gylcol, ethylene glycol), sorbitol, and trimethylol ethane or propane; synthetic drying oils including polybutadiene resin; natural fossil resins including copal, damar, elemi, gilsonite, glycol ester of damar, copal, elemi, and sandarac, shellac, Utah coal resin; rosin and rosin derivatives including gum rosin, tall oil rosin, and wood rosin, rosin esters formed by reaction with specific glycols or alcohols, rosin esters formed by reaction with formaldehydes, and rosin salts (calcium resinate and zinc resinate); phenolic resins formed by reaction of phenols with formaldehyde; polyester resins; epoxy resins, catalysts, and adjuncts; coumarone-indene resin; petroleum hydrocarbon resin; terpene resins; urea-formaldehyde resins; triazine-formaldehyde resins; modifiers; cellulosic materials including carboxymethylcellulose, cellulose acetate and ethylhydroxyethylcellulose; acrylics and their copolymers; methyl methacrylate; ethyl methacrylate; melamine; polyamides; polylactic acid; soybean protein; aliphatic polyesters, polyester copolymers with aliphatic and aromatic blocks, polyester amides, polyethylene oxides or polyglycols, polyester urethanes and mixtures of any of the foregoing materials.

Appropriate coatings are biodegradable and should not significantly impact the compostability of the product.

These materials can be applied through a process of dipping, spraying, painting or an alternative method which delivers the required control of covering. Alternatively, the outer coating may be pre-formed and applied to the substrate, for example, by adhesion or shrink wrapping. The coating process may be either a hot or cold process. Bonding processes for application of coatings of water-resistant material are known in the art. Before, during, or after any of the moulding processes, coatings can be applied to the surface of a consolidated substrate article.

Alternatively, the surface of the substrate can be physically or chemically modified such that it is rendered water-resistant. For example, the surface could be cross-linked (by heat, chemicals or UV light) to form a polymeric coating. Such cross-linking could be carried out on the substrate surface, or on a coating applied to its surface.

In addition to the coating material, a number of optional additive materials may be incorporated into the coating in order to impart desired properties. These include, but are not limited to plasticizers, lubricants, fillers and natural polymers.

Plasticizers and lubricants may optionally be added in order to improve processing, such as extrusion, film blowing, spreading or spraying, or final mechanical properties, particularly of polymer blends that are relatively stiff. A stiffer polymer blend may be dictated by other performance criteria, such as high temperature stability, strength, lower elongation, higher dead-fold, resistance to "blocking" during and after processing, and the like. In such cases, a plasticizer may allow the coating to satisfy certain processing and/or performance criteria.

Particulate fillers may optionally be added for a number of reasons, including but not limited to, increasing the Young's modulus, dead-fold properties, rigidity, breathability, thermal stability and for decreasing the cost and tendency of the coating to "block" or self-adhere during processing.

In general, fillers within the scope of the invention will generally fall within three classes or categories: (1) inorganic particulate fillers, (2) fibers and (3) organic fillers.

The combination of substrate materials will provide a porous dispenser. In some applications the conduit quality of the substrate may be further enhanced through a process of drilling holes, groves, channels or other carved, cast or milled, facet to direct the movement of water through the device internally and as exit point(s). Alternatively, porosity may be enhanced through using graded and /or engineered materials radiating from the core or in varying layered strata.

The substrate may be of a uniform or non-uniform nature. Variations of strata or radial configuration of layers of substrate materials may be employed to enhance or retard water flow rates.

The speed of water transmission will depend on the substrate material and its level of consolidation. For example, a more highly consolidated substrate material is likely to have a lower porosity.

Porosity may be easily measured by any of the methods known in the art. For example, the volume/density method, the water saturation method and the water evaporation method may be used. The consolidated substrate of the present invention preferably has a porosity in the range of 0.01-0.95, more preferably 0.05-0.75, more preferably 0.1-0.5.

The saturation of any plant enhancing additive will allow a controlled leaching of the compound into the water exiting the device and, as such, entry into the soil in the immediate proximity to the device and the root-ball of the plant(s) benefiting from the device.

As stated previously, the outer surface of the biodegradable dispenser exposed to the soil is substantially water-resistant with the exception of one or more feeder areas, thereby enabling directional control of the output of the irrigation device. In a preferred embodiment, this effect is achieved by coating the surface with a nonporous material. The feeder areas may be created by the removal of the coating from, or simply not applying the coating to, suitable exit portals, holes, points or windows. The configuration and positioning of the exit windows will define the positioning/depth of water exit point(s). This configuration will determine directional flow of the exiting water. The size of the exit window(s) will contribute to the rate of exit flow of the water. The configuration of the exposed core substrate material (the windows or portals) will deliver a choice of directional flow varying from one degree through to three hundred and sixty degrees - full radial saturation.

The employment of varying formulation(s) of waterproof or partially waterproof epidermal/outer skin coating will further determine the lifespan of the working device and its rate of biodegradability.

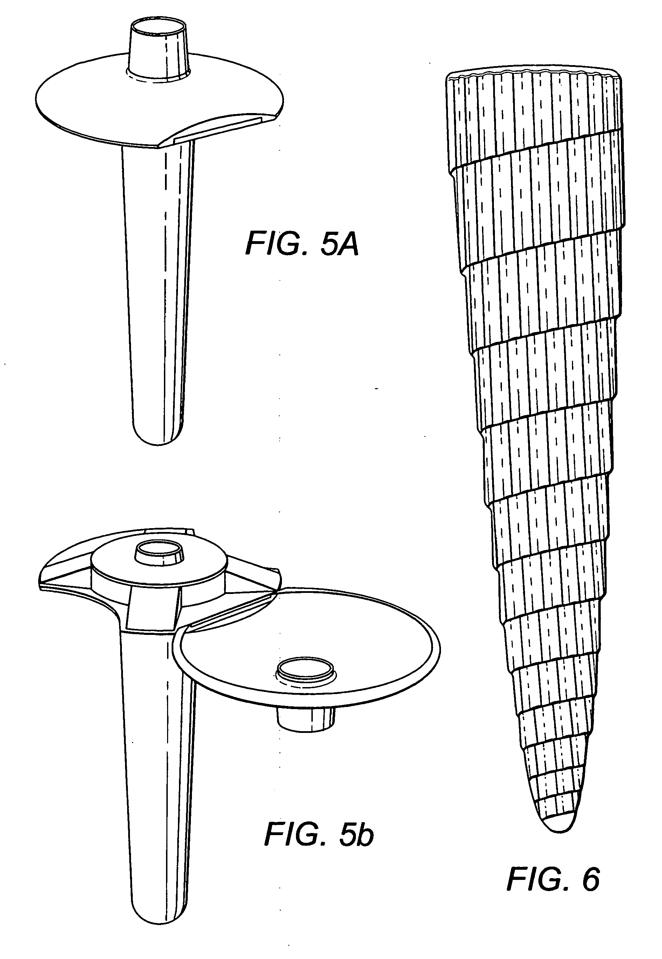

Although the embodiments shown in Figures 1 to 4 have a connector end integrally formed with the dispenser, the connector end may alternatively be a separate component. Figures 5A and 5B show an embodiment of the present invention in which the connector end is a separately formed connector component designed to be clamped around a shoulder portion of the dispenser body. The clamp-type connector end in this embodiment has a threaded male spigot to facilitate connection to a water supply. The water supply may be a liquid reservoir directly attached to the clamp connector, or may be a hose which is in turn coupled to a water supply. The separately formed component is in one typical embodiment formed from plastic. Alternatively, it is also envisaged that the component may be formed of organic and/or biodegradable materials.

As shown, the connector end has a lower part and an upper part, and a living hinge allowing the parts to be closed together. An engineered closure mechanism such as a snap-fitting (not shown) allows the connector end to be released and refastened on multiple occasions. The water supply is coupled to the upper part while, in use, the shoulder portion of the dispenser body is clamped between the lower and upper parts. Closing the two main parts of the connector forms a watertight seal for example, through the integration of O-ring seal(s) or similar mechanisms into the connector end (not shown), and ensures the flow of water through the dispenser body. A mesh sheet (not shown), or other filter may be incorporated into the connector to offer filtration.

A valve mechanism utilising flow control mechanics may be incorporated into the upper or lower sections of the plastic connector.

Variations of the plastic connector may incorporate engineered adaptors to facilitate further connection to micro, standard and unique bore configurations of domestic or commercial irrigation hose systems.

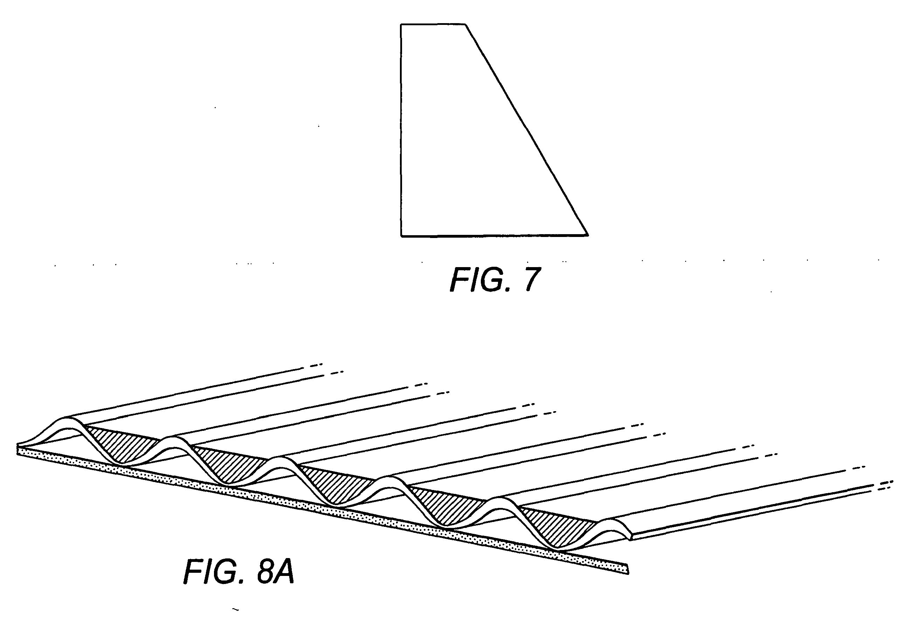

Figure 6 shows an embodiment of an irrigation device in which the dispenser body is formed from a fibreboard material, preferably corrugated fibreboard, which is folded or wrapped and then sealed or fastened into a suitable shape and configuration. In some examples, the dispenser body may be formed of a single fibreboard blank, such as that shown in Figure 7, which is wrapped around itself to achieve a substantially solid cross-section through the dispenser body. The shape of the blank may be altered according to requirements. For example, the removal of a corner of the blank will provide a female connector end in the completed device. This technique can also lead to a natural screw thread in the connector. Alternatively, the fibreboard material may be wrapped around a core section of the dispenser body which is filled with a different material. Furthermore, the corrugations of the fibreboard may be pre-filled with one or more additives which are subsequently dispensed in use. These may be provided either between or within the corrugations. In one example, a sheet containing the additional additives is placed on the blank before it is rolled up into the dispenser body, resulting in the additive sheet being held between the layers of the dispenser body. Corrugated fibreboard provides a relatively rigid dispenser body.

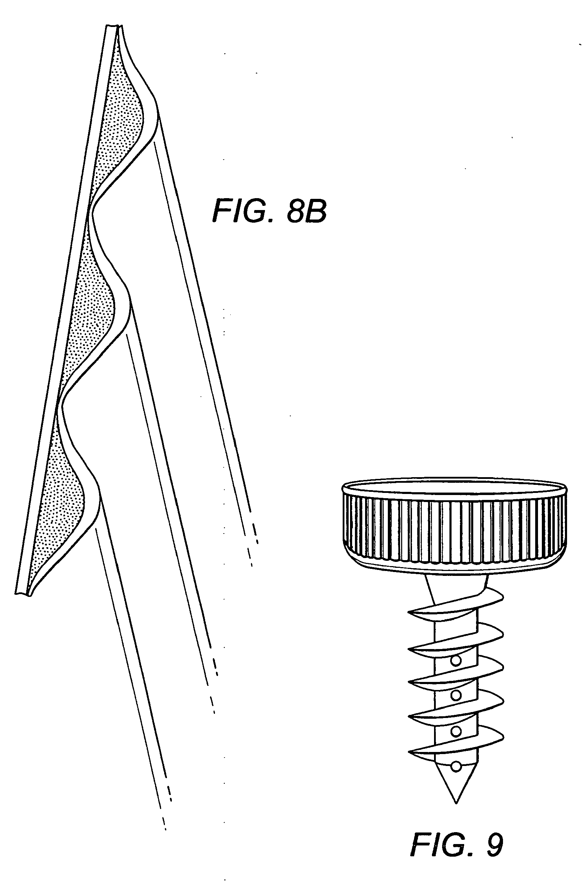

Figure 8A shows the unrolled corrugated blank with additives placed upon the corrugations. Alternatively, additives may be placed within the corrugations as shown in Figure 8B.

Figure 9 shows an embodiment of a screw threaded connector end for use in the embodiment shown in Figure 6. The connector end includes a screw threaded cap for connection to the neck of a plastic bottle and carries a hollow, screw threaded elongate body which can be screwed into the dispenser body. As one skilled in the art would recognise, similar screw threaded connector ends may be used in connection with other embodiments of the present invention.

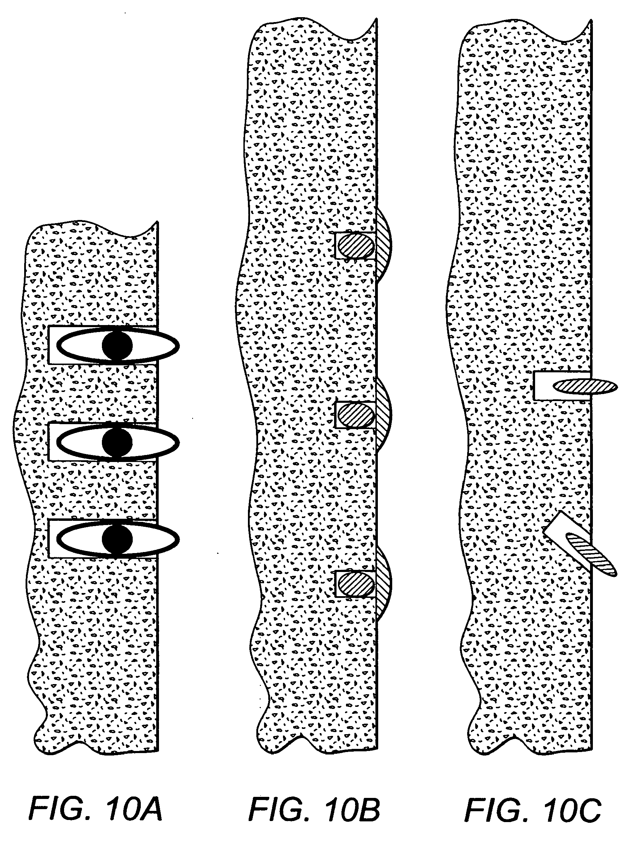

The present invention may carry seeds to plant in the surrounding medium. Preferably, these will be located on or within the water permeable feeder arrears of the dispenser body. In some examples the seeds will be embedded in the dispenser body, while in others they will be attached to the surface. A preferred method for attaching the seeds is to set them in a soluble gelatine sheet (for example, the seeds may be placed on one side of the sheet and the sheet then folded so that the seeds are enveloped entirely within the gelatine). The sheet is then attached to the feeder area at the appropriate location. Since the gelatine sheet is soluble the seeds will then become detached from the device when it is in use. Other soluble adhesives may also be used in accordance with the present invention. Figures 10A to 10C show possible seed arrangements where the seeds are set into rebates within the dispenser body. In Figure 10A each seed is contained in a separate gelatine capsule set into the dispenser body. In Figure 10B the rebates within the dispenser body are sealed by gelatine. In Figure 10C the seeds are held in rebates within the dispenser body without the presence of gelatine. It is not always necessary to provide rebates in the dispenser body when an adhesive sheet is used.

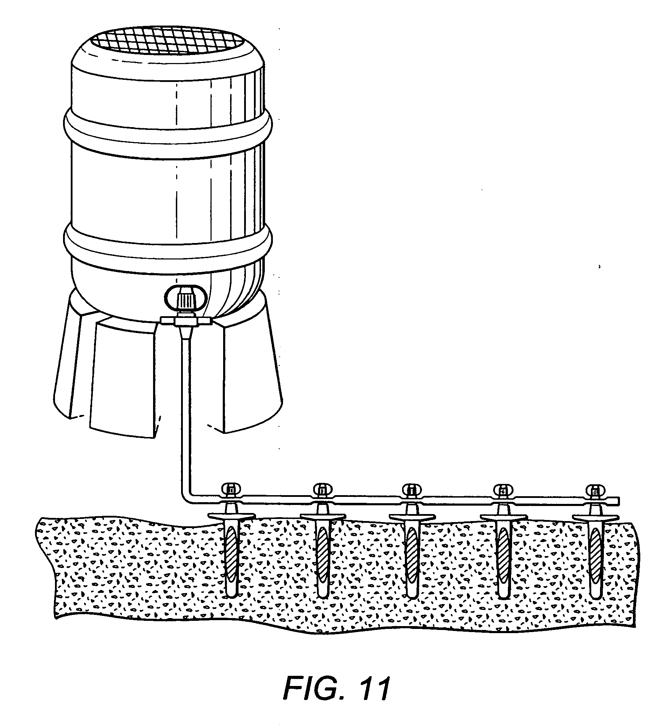

Figure 11 illustrates an example of an array of irrigation devices in accordance with the present invention coupled together via a network of hoses to a common water supply. The devices may be coupled in parallel or in series, or a combination of the two, to the water supply. The water supply may be a water butt typically used to collect rainwater, or a mains supply of water at a tap. The end connector in this example includes pipe fittings to receive, preferably as a push-fit, the end of the hoses used to connect the devices into a network.

Although the embodiments described above show the dispenser body extending predominantly parallel to the longitudinal axis of the connector end (in order to penetrate the earth or other medium), it would be recognised by one skilled in the art that a variety of alternative shapes may be used in accordance with the present invention. In particular, the dispenser body may extend in part transverse to the axis of the connector end (for example, in order to provide a greater surface area in contact with the medium at ground, or indeed any other, level). The dispenser body may extend separately in a plurality of transverse directions from the connector. Moreover, a number of dispenser bodies may be attached to a single connector.

The various elements of the device (such as the dispenser or the connector) may be colour-coded to indicate properties of the device. For example, the colour coding may indicate the nature of the additives or embedded seeds incorporated into the device. It also envisaged that colour coding may be used to indicate preferred watering frequencies.

## Claims

1. An irrigation device comprising:
a connector end for engagement with a liquid supply; and,
a dispenser body adapted to receive liquid from the connector end,
**characterised in that** the dispenser body is biodegradable and an outer surface of the dispenser body is substantially water-resistant with the exception of one or more permeable feeder areas from which liquid can be released at a higher rate than from the water-resistant areas.

2. An irrigation device according to claim 1, wherein the dispenser body has a hollow core section extending along at least a portion of the length of the body.

3. An irrigation device according to claim 1 or claim 2, wherein the connector end is also biodegradable

4. An irrigation device according to claim 1 or claim 2, wherein the connector end is re-usable.

5. An irrigation device according to any preceding claim, wherein the feeder areas are at least twice as permeable to liquid as the water-resistant areas, preferably 3-1000 times more permeable, more preferably 5-100 times more permeable.

6. An irrigation device according to any preceding claim, wherein up to 98% of the outer surface of the biodegradable dispenser is water-resistant.

7. An irrigation device according to any preceding claim, wherein over 40% of the outer surface of the biodegradable dispenser is water-resistant, preferably over 50%, more preferably over 75%, more preferably over 90%.

8. An irrigation device according to any preceding claim, wherein the biodegradable dispenser body comprises a liquid-transmissible substrate and a protective coating, wherein the protective coating provides the water-resistant outer surface of the dispenser.

9. An irrigation device according to any preceding claim, wherein the connector end is adapted for engagement with the liquid supply via a hose system.

10. An irrigation device according to any preceding claim, wherein the connector end comprises a threaded portion arranged to provide a suitable connection to the liquid supply.

11. An irrigation device according to any preceding claim, wherein the connector end is integrally formed with the biodegradable dispenser.

12. An irrigation device according to any preceding claim, wherein the dispenser body is formed from a fibreboard material which is folded or wrapped and then sealed or fastened into a suitable shape and configuration.

13. An irrigation device according to any preceding claim, wherein the dispenser body comprises a core section filled with a material which is different to that of the dispenser body itself.

14. An irrigation device according to any preceding claim, wherein the biodegradable material of the dispenser body comprises soluble additives.

15. An irrigation device according to any preceding claim, wherein the dispenser body carries one or more seeds in the outer surface of the body.

## Patentansprüche

1. Eine Bewässerungsvorrichtung bestehend aus:
einem Anschlussende zwecks Anschluss an eine Flüssigkeitszuleitung; und
einem Verteilerbehälter, der so adaptiert ist, dass er vom Anschlussende Flüssigkeit aufnehmen kann,
**dadurch gekennzeichnet, dass** der Verteilerbehälter biologisch abbaubar ist und eine Außenfläche des Verteilerbehälters mehr oder weniger wasserfest ist, ausgenommen eines oder mehrerer durchlässiger Zufuhrbereiche, durch die Flüssigkeit bei einem höheren Durchsatz als von den wasserfesten Bereichen durchgelassen werden kann.

2. Eine Bewässerungsvorrichtung entsprechend Anspruch 1, wobei der Verteilerbehälter entlang zumindest eines Teils der Länge des Behälters einen hohlen Kernabschnitt aufweist.

3. Eine Bewässerungsvorrichtung entsprechend Anspruch 1 oder Anspruch 2, wobei das Anschlussende ebenfalls biologisch abbaubar ist.

4. Eine Bewässerungsvorrichtung entsprechend Anspruch 1 oder Anspruch 2, wobei das Anschlussende wiederverwendbar ist.

5. Eine Bewässerungsvorrichtung entsprechend einem der vorangegangenen Ansprüche, wobei die Zufuhrbereiche mindestens zweimal so flüssigkeitsdurchlässig sind wie die wasserfesten Bereiche, und vorzugweise 3-1000 mal durchlässiger und bevorzugter 5-100 mal durchlässiger sind.

6. Eine Bewässerungsvorrichtung entsprechend einem der vorangegangenen Ansprüche, wobei bis zu 98% der Außenfläche des biologisch abbaubaren Verteilers wasserfest ist.

7. Eine Bewässerungsvorrichtung entsprechend einem der vorangegangenen Ansprüche, wobei mehr als 40% der Außenfläche des biologisch abbaubaren Verteilers, vorzugweise mehr als 50%, bevorzugter mehr als 75%, noch bevorzugter mehr als 90% wasserfest ist.

8. Eine Bewässerungsvorrichtung entsprechend einem der vorangegangenen Ansprüche, wobei der biologisch abbaubare Verteilerbehälter aus einem flüssigkeitsübertragbarem Substrat und einer Schutzschicht besteht, wobei die Schutzschicht die wasserfeste Außenfläche des Verteilers bildet.

9. Eine Bewässerungsvorrichtung entsprechend einem der vorangegangenen Ansprüche, wobei das Anschlussende zum Anschluss an die Flüssigkeitszuleitung über ein Schlauchsystem adaptiert ist.

10. Eine Bewässerungsvorrichtung entsprechend einem der vorangegangenen Ansprüche, wobei das Anschlussende ein Gewindeteil aufweist, das so angelegt ist, das es an die Flüssigkeitszuleitung angeschlossen werden kann.

11. Eine Bewässerungsvorrichtung entsprechend einem der vorangegangenen Ansprüche, wobei das Anschlussende integral mit dem biologisch abbaubaren Verteiler gebildet wird.

12. Eine Bewässerungsvorrichtung entsprechend einem der vorangegangenen Ansprüche, wobei der Verteilerbehälter aus Faserplattenmaterial gebildet wird, das gefaltet oder eingepackt ist und dann einen geeignete Form und Konfiguration versiegelt oder befestigt wird.

13. Eine Bewässerungsvorrichtung entsprechend einem der vorangegangenen Ansprüche, wobei der Verteilerbehälter einen Kernabschnitt aufweist, der mit anderem Material als dem des Verteilerbehälters selbst gefüllt ist.

14. Eine Bewässerungsvorrichtung entsprechend einem der vorangegangenen Ansprüche, wobei das biologisch abbaubare Material des Verteilerbehälters lösliche Zusätze enthält.

15. Eine Bewässerungsvorrichtung entsprechend einem der vorangegangenen Ansprüche, wobei der Verteilerbehälter an der Außenfläche des Behälter einen oder mehrere Samen aufweist.

## Revendications

1. Dispositif d'irrigation comprenant :
une extrémité raccord destinée à s'engager avec une alimentation en liquide ; et
un corps distributeur adapté de façon à recevoir du liquide de l'extrémité raccord,
**caractérisé en ce que** le corps distributeur est biodégradable et une surface extérieure du corps distributeur est essentiellement résistante à l'eau à l'exception d'une ou de plusieurs zones d'alimentation perméables desquelles le liquide peut être relâché à un débit plus élevé que des zones résistantes à l'eau.

2. Dispositif d'irrigation selon la revendication 1, dans lequel le corps distributeur a une section centrale creuse s'étendant au moins le long d'une partie de la longueur du corps.

3. Dispositif d'irrigation selon la revendication 1 ou la revendication 2, dans lequel l'extrémité raccord est aussi biodégradable.

4. Dispositif d'irrigation selon la revendication 1 ou la revendication 2, dans lequel l'extrémité raccord est réutilisable.

5. Dispositif d'irrigation selon l'une quelconque des revendications précédentes, dans lequel les zones d'alimentation sont au moins deux fois aussi perméables au liquide que les zones résistantes à l'eau, de préférence 3 à 1000 fois plus perméables et, ce qui est plus préférable 5 à 100 fois plus perméables.

6. Dispositif d'irrigation selon l'une quelconque des revendications précédentes, dans lequel jusqu'à 98 % de la surface extérieure du distributeur biodégradable sont résistants à l'eau.

7. Dispositif d'irrigation selon l'une quelconque des revendications précédentes, dans lequel plus de 40 % de la surface extérieure du distributeur biodégradable sont résistants à l'eau, de préférence plus de 50 %, ce qui est plus préférable plus de 75 % et ce qui est plus préférable plus de 90 %.

8. Dispositif d'irrigation selon l'une quelconque des revendications précédentes, dans lequel le corps distributeur biodégradable comprend un substrat transmissible par liquide et un revêtement protecteur, ce revêtement protecteur fournissant la surface extérieure résistante à l'eau du distributeur

9. Dispositif d'irrigation selon l'une quelconque des revendications précédentes, dans lequel l'extrémité raccord est adaptée pour s'engager avec l'alimentation en liquide par l'intermédiaire d'un système à tuyau flexible.

10. Dispositif d'irrigation selon l'une quelconque des revendications précédentes, dans lequel l'extrémité raccord comprend une partie filetée agencée de façon à fournir un raccord approprié à l'alimentation en liquide.

11. Dispositif d'irrigation selon l'une quelconque des revendications précédentes, dans lequel l'extrémité raccord est formée solidairement avec le distributeur biodégradable.

12. Dispositif d'irrigation selon l'une quelconque des revendications précédentes, dans lequel le corps distributeur est formé à partir d'un matériau en panneau de fibres qui est plié ou enveloppé puis scellé ou attaché dans une forme ou une configuration appropriée.

13. Dispositif d'irrigation selon l'une quelconque des revendications précédentes, dans lequel le corps distributeur comprend une section centrale remplie d'un matériau qui est différent de celui du corps distributeur lui-même.

14. Dispositif d'irrigation selon l'une quelconque des revendications précédentes, dans lequel le matériau biodégradable du corps distributeur comprend des additifs solubles.

15. Dispositif d'irrigation selon l'une quelconque des revendications précédentes, dans lequel le corps distributeur porte une ou plusieurs semences dans la surface extérieure du corps.
